# EUROPÄISCHE PATENTSCHRIFT

(11) **EP 2 709 069 B1**
(45) Veröffentlichungstag und Bekanntmachung des Hinweises auf die Patenterteilung: **08.08.2018**
(21) Anmeldenummer: 13004460.5
(22) Anmeldetag: 12.09.2013
(51) Int. Cl.: G06T 15/20

(54) **Verfahren und Vorrichtung für ein bildgebendes Fahrerassistenzsystem mit adaptiver Umsichtdarstellung**
Method and apparatus for an imaging driver assistance system with adaptive all-round view display
Procédé et dispositif pour un système d'assistance au conducteur avec représentation adaptative de l'environnement

(30) Priorität: 15.09.2012 DE 102012018325
(43) Veröffentlichungstag der Anmeldung: 19.03.2014
(73) Patentinhaber: ZF Friedrichshafen AG, 88046 Friedrichshafen (DE)
(72) Erfinder: Beuschel, Ralf, 88239 Wangen (DE); Weuffen, Dieter, 88239 Wangen (DE); Abhau, Jochen, 6900 Bregenz (AT)
(74) Vertreter: Riegel, Werner

(56) Entgegenhaltungen:
- WO-A1-2013/053589
- WO-A1-2013/083364
- DE-A1-102008 034 594
- JP-A- 2009 232 310
- JP-A- 2012 147 149
- US-A1- 2002 018 047
- US-A1- 2010 245 573
- US-A1- 2012 069 153

## Beschreibung

### Stand der Technik

Im Bereich der Fahrzeugtechnik werden vermehrt Kameras eingesetzt, um den Fahrer in verschiedenen Fahrsituationen zu unterstützen. In der Klasse der bildgebenden Systeme haben sich bereits Rückfahrkameras etabliert, die insbesondere in Einparksituationen das Unfallrisiko reduzieren.

Die Rückfahrkameras wird in der Regel am Heck des Fahrzeugs angebracht, wie beispielsweise in DE 10342971 A1 beschrieben. Das Kamerabild wird meistens ohne weitere Verarbeitung oder mit Einparkhilfslinien zur Darstellung gebracht.

Mit dem Gegenstand der DE 10 2000 062 121 A1 ist es bekannt, ausgehend von einer Kameraeinheit mit Fahrkorridor-Anzeigefunktion, ein System zur Generierung von Fahrkorridormarkierungen vorzusehen.

Während der Rückwärtsfahrt wird das Kamerabild von einer beispielsweise am Heckbereich des Fahrzeuges angeordneten Videokamera aufgenommen und im Fahrzeuginnenraum auf einem Display wiedergegeben. Auf die Bodenfläche der von der Kamera dargestellten Abbildung wird eine bestimmte fahrzeugspezifische Markierung projiziert, die u. a. auch vom Lenkwinkel des Fahrzeuges abhängig ist.

Nachteil dieser Anordnung ist jedoch, dass lediglich von einer einzigen Kamera ein statisches Kamerabild erzeugt wird, welches ein eingeschränktes Sichtfeld aufweist und den Umgebungsbereich des einen Kamerabildes nicht berücksichtigt.

Sowohl im PKW- als auch im Nutzfahrzeugbereich werden inzwischen Umsichtsysteme verwendet, die vier oder mehr Kameras mit großem Erfassungsbereich verwenden, um das Umfeld des Fahrzeugs aufzunehmen. Um diese Funktion zu erfüllen, werden die Kameras mit Weitwinkelobjektiven oder speziellen Spiegeln ausgestattet, wobei die Rohbilder in eine für den Fahrer brauchbare Darstellung transformiert werden müssen. Eine verbreitete Darstellungsform stellt die virtuelle Draufsicht in der Art einer Vogelperspektive dar, die dem Fahrer eine gute Orientierung im Nahbereich des Fahrzeugs ermöglicht, wie beispielsweise in der DE 60003750 T2 beschrieben.

Der Nachteil dieser Darstellungsform besteht darin, dass entfernte Objekte überhaupt nicht angezeigt werden, obwohl sie von den Kameras erfasst wurden. Daher hat der Benutzer Probleme, sich in der Umgebung zu orientieren, beispielsweise wenn bei einer Rückwärtsfahrt ein 5 m entferntes Garagentor angefahren werden muss, welches außerhalb des Darstellungsbereiches der Vogelperspektivendarstellung liegt. Aus diesem Grund wird häufig die Vogelperspektivendarstellung mit einer zweiten Darstellung in der Perspektive einer Rückfahrkamera oder Umsichtkamera kombiniert, wobei das Bild der Umsichtdarstellung aus der Bildinformation einer oder mehrer Kameras des Umsichtsystems berechnet wird.

Bei der Darstellung aus der Vogelperspektive wird prinzipiell davon ausgegangen dass der Bereich um das Fahrzeug flach ist und der Höhe der Fahrbahnoberfläche entspricht. In dieser Draufsicht werden daher erhöhte Objekte wie Fahrzeuge, Gebäude oder Personen stark verzerrt dargestellt. Der visuelle Eindruck entspricht einem "Herunterklappen" oder "In-die-Längeziehen" des Objekts. Die Hypothese der flachen Welt in der Umgebung eines Fahrzeuges ist generell nur im Nahbereich des Fahrzeugs mit hoher Wahrscheinlichkeit gültig.

Andererseits kann davon ausgegangen werden, dass Objekte im Fernbereich in der Regel erhaben sind oder senkrecht stehen. Insbesondere wird diese Bedingung ab der Horizontlinie erfüllt und der Himmel sollte dementsprechend auf eine annähernd senkrechte Wand und nicht auf die Fahrbahnfläche projiziert werden. Es hat sich daher für die Darstellung der Umsicht als sinnvoll erwiesen, die Hypothese einer Projektionsfläche, welche annähernd senkrecht auf der Fahrbahnfläche steht, zu verwenden. Ein solches Verfahren ist z.B. in der älteren Patentanmeldung DE 10 2011 014 368 A1 beschrieben.

Keine der Druckschriften nach dem Stand der Technik beschäftigt sich mit dem Problem, dass die virtuelle Projektionsfläche an die reale dreidimensionale Umgebung angepasst wird.

Eine besondere Rolle spielt dieses Problem dann, wenn die virtuelle Projektionsfläche nicht mit der realen Umwelt übereinstimmt oder nur eine teilweise Übereinstimmung erfährt.

Als Beispiel wird genannt, dass beispielsweise in einem engen Parkraum zwar Computer generiert eine virtuelle Projektionsfläche geschaffen wird, die als Schachtel mit umlaufenden Seitenwänden und mit einem Boden definiert werden kann.

Falls jedoch bei diesem Schachtel-Modell ein Gegenstand der Umgebung in den Bereich der Projektionsfläche gerät, ist es bisher nicht bekannt, die Projektionsfläche an diesen Gegenstand, der aus der realen Welt stammt, der virtuellen Projektionsfläche anzupassen.

Nachteil dieser fehlenden Anpassung ist, dass es im Umgebungsbereich zu starken Darstellungsverzerrungen kommt, was für den Benutzer irritierend und störend ist. Die Druckschrift US 20020018047 offenbart eine Vorrichtung und ein Verfahren zur Bildzusammensetzung in einem Kraftfahrzeug, wobei die aufgenommen Bilder auf ein situationsangepasstes dreidimensionales Projektionsmodell abgebildet werden. Aufgabe der Erfindung ist es deshalb, ein Verfahren und eine Vorrichtung für ein bildgebendes Fahrassistenz-System vorzuschlagen, bei dem eine Umsichtdarstellung geschaffen wird, welche in der Lage ist, sich an die reale Welt adaptiv anzupassen.

Die Aufgabe wird durch die technische Lehre des Anspruchs 1 gelöst.

Nach der Erfindung wird der allgemeinere Begriff "Umsicht" anstatt des eingeschränkten Begriffes "Rundumsicht" verwendet. Der Begriff "Rundumsicht" impliziert eine Abbildung der Umgebung über einen Blickwinkel von 360 Grad, der aber auch bei der Erfindung möglich ist. Die Erfindung ist jedoch auf einen solchen Abbildungswinkel von 360 Grad nicht beschränkt, sondern beansprucht auch kleiner als 360 Grad ausgebildete Abbildungswinkel. Unter dem Begriff der "Umsicht" werden nach der Erfindung deshalb alle Abbildungswinkel kleiner oder gleich 360 Grad verstanden.

Bei der Darstellung einer virtuellen Umsicht um ein Fahrzeug ist es prinzipiell wünschenswert, den Nahbereich als eine waagerechte Fläche entsprechend der Fahrbahn darzustellen und erhabene Objekte wie Personen oder Fahrzeuge auf eine zur Fahrbahn annähernd senkrechte Fläche abzubilden.

Im Gegensatz zu existierenden Bilddarstellungsverfahren, die entweder nur eine flache Darstellung oder nur eine Umsicht mit senkrechter Projektionsfläche erzeugen, verwendet das vorgeschlagene Verfahren eine Kombination aus beiden Darstellungsarten. Es wird also im Nahbereich um das Fahrzeug eine Projektion auf die Fahrbahnebene durchgeführt und im Fernbereich eine Projektion auf eine annähernd senkrechte Fläche zur Fahrbahnebene.

Um eine für den Benutzer zufriedenstellende und ansprechende Visualisierung zu erhalten, ist es vorteilhaft, wenn der Übergang zwischen der waagerechten und annähernd senkrechten Projektionsfläche möglichst exakt am Fußpunkt des nächstliegenden erhöhten Objekts ausgerichtet wird. Andernfalls entstehen Fehldarstellungen von herunter- oder herauf geklappten Objekten oder Teilen von Objekten, die für den Benutzer störend sind.

Unter dem Begriff "Fußpunkt des nächstliegenden erhöhten Objektes" wird ein Lot an der vordersten Begrenzungslinie des Objektes verstanden, welches nächstliegend dem Betrachter (Kamera) angeordnet ist.

Die vorgeschlagene Erfindung verhindert die Fehldarstellung von erhabenen Objekten durch die Verwendung einer Distanzinformation zu den nächstliegenden erhöhten Objekten, die das Fahrzeug umgeben, mittels einer oder mehrerer Distanzmesseinheiten, die möglichst den gesamten Umgebungsbereich des Fahrzeugs abdecken.

Ein weiteres Merkmal der Erfindung ist die Möglichkeit, den Übergang zwischen der waagerechten und annähernd senkrechten Projektionsfläche mit einer Rundung oder einer zwischen Bodenfläche und annähernd senkrechter Fläche liegenden schrägen Übergangsfläche darzustellen.

Die Anwendung der Erfindung liegt in der Unterstützung des Fahrers bei Park- und Rangiermanövern. Durch das optimierte Bilddarstellungssystem können gefährliche Verschattungseffekte, sowie störende Wiederholungseffekte in der Bilddarstellung verhindert werden. Somit erhält der Fahrer in jeder Umgebungssituation eine optimale Bilddarstellung der virtuellen Umsicht.

Erfindungsgemäß wird die Aufgabe durch eine Vorrichtung gelöst, die mehrere Distanzinformationen über die Entfernung zu umgebenden Objekten im Sichtbereich der Kameras verwendet.

Entsprechend dem vorgeschlagenen Verfahren soll die Art der Zusammenfügung mehrerer Kamerabilder zu einer Umsichtdarstellung dynamisch verändert werden, um eine möglichst verzerrungsfreie Darstellung der Fahrbahnebene und erhöhter Objekte zu erzielen.

Die vorliegende Erfindung beschreibt deshalb ein bildgebendes Fahrerassistenzsystem bestehend aus mindestens einer Kamera mit Weitwinkelobjektiv, einer Distanzmesseinheit, einer Bildverarbeitungseinheit und einer Anzeigeeinheit. Die Bildverarbeitungseinheit generiert aus den Kamerabildern eine zusammengesetzte, virtuelle Umsicht, die einer Projektion auf einen das Fahrzeug umgebenden geschlossenen Polyeder entspricht, der aus einer Grundfläche, einer dazu parallelen Dachfläche und mindestens vier annähernd senkrecht darauf stehenden Seitenflächen entspricht. Ein vom Benutzer wählbarer Ausschnitt dieser virtuellen Umsicht wird auf der Anzeigeeinheit dargestellt. Es werden aus den Kameradaten die Bilddaten mindestens für einen Teil der Grundfläche und der annähernd senkrechten Seitenfläche berechnet.

Zur Erzeugung der Umsichtdarstellung werden ein oder mehrere Kamerabilder entsprechend ihrer Aufnahmeposition am Fahrzeug auf einer virtuellen Projektionsfläche angeordnet. In der vorgeschlagenen Implementierung wird die dynamische Anpassung der Zusammenfügung durch die Manipulation der virtuellen Projektionsfläche erreicht.

Unter einer virtuellen Projektionsfläche wird eine Fläche im dreidimensionalen Raum verstanden. Sie ist Teil eines mathematischen Abbildungsmodells, welches darauf gründet, daß die von einer Kamera aufgenommene Bildinformation rückwärts auf eine solche Projektionsfläche abgebildet wird. Diese mathematische Simulation berücksichtigt die Montagepositionen der Kameras am Fahrzeug, sowie die optischen Eigenschaften der Kameras, um eine verzerrungsfreie Bilddarstellung zu erzielen.

Zur weiteren Erläuterung dient die Vorstellung, dass wenn man den Bildaufnahmesensor einer Kamera durch ein lichtdurchlässiges Dia und eine geeignete Lichtquelle ersetzen würde, sich auf einer realen zwei- oder dreidimensionalen Projektionsfläche dieselbe Bilddarstellung ergeben würde, wie auf der virtuellen Projektionswand.

Die Erfindung arbeitet mit dieser virtuellen Projektionsfläche als Arbeitshypothese. Die so erzeugte virtuelle Projektionsfläche ist Gegenstand der vorliegenden Erfindung.

In einer bevorzugten Ausgestaltung der Erfindung ist die virtuelle Projektionsfläche - entsprechend etwa der rechteckförmigen Kontur des Fahrzeuges als (gebogener dreidimensionaler) Raumkörper ausgebildet, der das Fahrzeug in einigem Abstand von seinen Körperkanten allseitig umgibt. Das Fahrzeug ist sozusagen in eine, das Fahrzeug allseitig umgebende, größere Schachtel hinein gestellt. Die Innenflächen der Schachtel sind die virtuellen Projektionsflächen. Die Schachtel muss jedoch nicht lösungsnotwendig das Fahrzeug von allen Seiten umgeben. Es reicht aus, die Schachtel an den Seiten zu schließen, an denen eine virtuelle Projektionsfläche gefordert ist. Alle anderen Seiten, die nicht als Projektionsflächen notwendig sind, können dann entfallen.

Der sich aus der Formgebung einer Schachtel ergebende Raumformgedanke sieht vor, dass bodenseitige und parallel hierzu deckenseitige, ebene und horizontale Begrenzungsflächen vorhanden sind, die sozusagen den Boden und den Deckel der Schachtel bilden.

In der Draufsicht sind die horizontalen boden- und deckelseitigen Flächen der Schachtel bevorzugt mit abgerundeten Ecken ausgebildet.

Die Seitenflächen der Schachtel, die erfindungsgemäß die virtuellen Projektionsflächen bilden, sind - zur Vermeidung von rechtwinkligen Eckenkanten - gebogen und sind in ihrer Ebene etwa vertikal im Raum ausgerichtet. Sie erstrecken sich also senkrecht zu den boden- und deckelseitigen horizontalen Begrenzungsflächen der Schachtel und sind miteinander verbunden.

Es handelt sich also um einen Raumkörper, der wie eine ovale Hutschachtel aussieht, der als virtueller Raumkörper das mit rechteckigen Raumkonturen beschriebene Fahrzeug umgibt. Das Fahrzeug ist sozusagen in den Innenraum der Schachtel mit allseitigem Abstand zu deren Seitenflächen hineingestellt.

Es hat sich deshalb als vorteilhaft herausgestellt, für die Projektion einen geschlossenen Polyeder (vorher als Raumkörper oder Schachtel bezeichnet) bestehend aus einer Grundfläche, einer dazu parallelen Dachfläche und mindestens zwei annähernd senkrecht darauf stehenden Seitenflächen, die das Fahrzeug mindestens teilweise umgeben, zu verwenden. Die Seitenflächen und Grundflächen eines solchen Polyeders bilden die Projektionsfläche. Es hat sich des Weiteren als vorteilhaft erwiesen, wenn die Übergänge der Seitenflächen des Polyeders durch Rundungen gebildet werden.

Wesentliches Merkmal der Erfindung ist, dass eine Bildverarbeitungseinheit mindestens ein Kamerasignal und eine Distanzinformation erhält und diese mittels eines Projektionsflächenmodells und einer Projektionsflächenmanipulationseinheit in eine Darstellungsanleitung (Abbildungsvorschrift) überführt. Die Darstellungsanleitung wird von der Bildtransformationseinheit auf die Kamerabilder angewendet, um die Bilddarstellung für den Benutzer zu erzeugen.

Der etwa einer ovalen Hutschachtel entsprechende Raumkörper sollte möglichst in Fahrtrichtung und in Rückwärtsrichtung des Fahrzeuges gerade, vordere und hintere Seitenbegrenzungen aufweisen.

Es wurde erkannt, dass auch die Umgebungsinformationen, z. B. eine Parklücke, die befahren werden muss, ein Garagentor, dessen Einfahrt getroffen werden muss und dergleichen mehr, ebenfalls in der Regel geradlinige Körperkanten aufweisen, und nur wenige Objekte dreidimensional geformte und gebogene Raumkonturen aufweisen.

Aus diesem Grund werden - der Realität angepasste - Raumkonturen der virtuellen Projektionsfläche vorgeschlagen, die in dieser Form nicht bekannt waren.

Bei der Erfindung wurde ferner als vorteilhaft erkannt, wenn insgesamt an einem Fahrzeug vier Kameras verwendet werden, wobei bevorzugt jeweils eine frontseitige und eine rückwärtige Kamera vorhanden sind. An den Seitenwänden des Fahrzeuges sind vorteilhaft jeweils einander gegenüberliegende und in entgegen gesetzte Richtung blickende Kameraeinheiten vorhanden.

Hierauf ist die Erfindung jedoch nicht beschränkt. Die Erfindung kann auch vorsehen, dass lediglich drei Kameras verwendet werden. In diesem Fall ist dann eine an der rückwärtigen Front des Fahrzeuges angebrachte, nach hinten blickende Kamera mit zwei an den gegenüberliegenden Seitenwänden des Fahrzeuges angeordneten weiteren Kameras kombiniert.

In einer dritten Ausgestaltung der Erfindung kann vorgesehen sein, dass lediglich eine frontseitige Kamera mit jeweils zwei seitlich entgegengesetzt blickenden Kameras kombiniert wird, während die rückwärtige Kamera nach einem anderen Prinzip arbeitet oder nicht in das erfindungsgemäße Modell einer virtuellen Projektionsfläche einbezogen ist.

Die Erfindung ist demnach nicht auf die Anordnung von vier Kameras an einem Fahrzeug beschränkt.

Statt der angegebenen Anzahl von vier Kameras können auch mehr als vier Kameras vorhanden sein, wobei im gezeigten Ausführungsbeispiel alle Kameras bevorzugt einen Blickwinkel von mehr als 100 Grad aufweisen.

Die Erfindung ist nicht auf einen bestimmten Blickwinkel der Kameras beschränkt. Es kommt nur darauf an, dass die Kameras so angeordnet sind, dass sich die seitliche Begrenzung der Blickwinkel benachbarter Kameras in einem bestimmten Winkel außerhalb der Außenkontur des Fahrzeuges schneiden. Sie bilden damit Überlappungsbereiche.

Hier setzt die Erfindung ein, die zum Gegenstand hat, dass mit Hilfe einer Distanzmesseinheit zwischen dem Fahrzeug und dem nächst liegenden, zu erkennenden Objekt eine Entfernungsmessung stattfindet und dass die Entfernungsmessung für die Veränderung (Verformung) der virtuellen Projektionsfläche herangezogen wird.

Damit wird der Vorteil erreicht, dass die virtuelle Projektionsfläche um den Abstand des zu erkennenden Objektes in Richtung auf das Fahrzeug verschoben und damit angepasst wird, wodurch stets dafür gesorgt wird, dass sich das darzustellende Objekt bei einer (derart verschobenen) Projektionsfläche immer im Bereich der Ebene der Projektionsfläche (oder dahinter) befindet. Ein Hineinragen des abzubildenden Objektes durch die Projektionsfläche hindurch in Richtung auf das mit Kameras ausgerüstete Fahrzeug wird damit sicher vermieden. Damit wären unerwünschte Abbildungsergebnisse die Folge, die nach der Erfindung durch die adaptive Anpassung der Projektionsfläche vermieden werden.

Für eine solche Distanzmessung können sämtliche bekannte Distanzmesseinrichtungen verwendet werden, die zum Stand der Technik gehören. Es wird hierbei bevorzugt, wenn eine Ultraschallmesseinrichtung verwendet wird, die einen bestimmten Messkegel von den Kanten des Kraftfahrzeuges aus in die Eckenbereiche der Umgebung sendet, um einen bestimmten Erfassungsbereich der Distanzmessung zu definieren.

Als optische Distanzmessung kann die Interferometrie mit kohärenten Wellen verwendet werden. Diese ist bei der Messung von Längenänderungen sehr präzise. Die Genauigkeit hängt im Wesentlichen von der benutzten Wellenlänge ab. In der Praxis werden Licht- und Radiowellen genutzt. Um mit einem Interferometer auch Entfernungen messen zu können, werden unter anderem das Phasenschiebeverfahren, die Weißlichtinterferometrie oder auch die konoskopische Holografie eingesetzt.

Daneben kann als Distanzmessung die konfokale Abstandsmessung verwendet werden. Ein Konfokalsensor erhält nur ein Signal, wenn sich das Messobjekt genau im Fokus der Optik befindet. Die Konfokaltechnik ist eine direkte Messung, da sie Objekt oder Optik um die Messlänge verschiebt und die Verschiebung mit einem Referenzmaßstab vergleicht.

Als Distanzmessung kommen auch indirekte Messverfahren in Betracht. Alle indirekten Methoden haben gemeinsam, dass sie nicht die Entfernung selbst messen, sondern eine von ihr abhängige Größe - beispielsweise die Laufzeitmessung eines Signals oder Echos (Laser, Radar oder die Richtung einer Peilung). Indirekt werden auch alle Änderungen der Entfernung gemessen, etwa mittels Dopplereffekt.

Die Laufzeitmessung beruht darauf, dass sich elektromagnetische und akustische Wellen mit endlicher, bekannter Geschwindigkeit ausbreiten. Sendet man ein Signal zu einem Messobjekt, von dem es reflektiert wird, und misst die Zeit, die es für den Hin- und Rückweg benötigt, so kann man aus der Laufzeit Δ*t* und der Ausbreitungsgeschwindigkeit c des Signals, das ist die Gruppengeschwindigkeit der Welle, die Objektentfernung r berechnen. Dieses Messprinzip wird beispielsweise von Ultraschallsensoren verwendet.

Als weiteres Distanzmessverfahren wird die optische Stereoskopie vorgeschlagen. Bei diesem Verfahren werden zwei Kameras mit gleicher Blickrichtung in einem definierten Abstand (Basisbreite) angebracht. Durch die unterschiedliche Position der Kameras ergibt sich eine distanzabhängige Parallaxe (Verschiebung) bei der Betrachtung von Objekten. Die Verschiebung ist umso größer je näher sich das Objekt bei der stereoskopischen Kamera befindet. Die Verschiebung zwischen den beiden Kamerabildern kann mittels mathematischer Verfahren bestimmt werden. Aus der Verschiebung zweier Bildpunkte und der bekannten Basisbreite kann der Abstand des Umgebungsobjekts zur Kamera bestimmt werden.

In neuerer Zeit sind Video-Kameras bekannt geworden, die nach dem "time-of-flight"-Prinzip arbeiten. Hier wird mit jedem Video-Pixel auch die diesem Pixel zugeordnete Distanz-Information übermittelt.

Die Erfindung ist also nicht auf ein bestimmtes Prinzip der Distanzmessung beschränkt, sondern es kommt nur darauf an, von der jeweiligen Kante des Fahrzeuges aus im Sichtbereich der Kameras eine Distanzmessung zu den nächstliegenden Objekten vorzunehmen.

Wesentliches Merkmal der Erfindung ist, dass eine Bildverarbeitungseinheit mindestens ein Kamerasignal und mindestens eine Distanzinformation erhält und diese mittels eines Projektionsflächenmodells und einer Projektionsflächenmanipulationseinheit in eine Darstellungsanleitung überführt. Die Darstellungsanleitung wird von der Bildtransformationseinheit auf die Kamerabilder angewendet um die Bilddarstellung für den Benutzer zu erzeugen.

Im Mittelpunkt der Erfindung steht die adaptive Anpassung der virtuellen Projektionsflächen an Umgebungsobjekte, die in diese virtuelle Projektionsfläche hinein ragen und deshalb die Abbildung an diesem Punkt der Projektionsfläche verändern.

Würde die Projektionsfläche an ein in den Innenraum der Schachtel hineinragenden Gegenstand nicht angepasst werden, käme es zu einer verzerrten Abbildung dieses Gegenstandes.

Hier sieht die Erfindung vor, dass nun genau für einen solchen Gegenstand, der sozusagen in den Innenraum der virtuellen Schachtel hineinragt, eine Anpassung der virtuellen Projektionsfläche erfolgt.

Dies erfolgt dadurch, dass durch die im Prinzip rundum erfolgenden Distanzmessungen erkannt wird, dass ein Objekt sozusagen in den Innenraum der virtuellen Schachtel hineinragt und durch diese Distanzmessung wird der in den Innenraum hineinragende Vorsprung dieses Gegenstandes erfasst und dementsprechend die Projektionsfläche nachgeführt.

Dies bedeutet, die Projektionsfläche ebenfalls entsprechend der Vorderkante dieses in die Schachtel hineinragenden Gegenstandes nach innen gezogen wird, so dass durch eine adaptive, dynamische Anpassung der Projektionsfläche stets dafür gesorgt wird, dass alle abzubildenden Gegenstände außerhalb der virtuellen Projektionsfläche angeordnet bleiben, auch wenn die Projektionsfläche adaptiv nach innen hinein verlegt werden muss.

Mit diesem neuartigen Verfahren wird stets dafür gesorgt, dass keines der abzubildenden Objekte der Umgebung in den Innenraum der virtuellen Projektionsfläche hinein ragt.

Vielmehr wird die Projektionsfläche nachgeführt, um ein solches Hineinragen und ein damit nachteiliges verzerrtes Abbilden zu verhindern.

Die Erfindung sieht auch vor, dass eine Verzerrungskorrektur für eine Weitwinkeloptik verwendbar ist.

Der Erfindungsgegenstand der vorliegenden Erfindung ergibt sich nicht nur aus dem Gegenstand der einzelnen Patentansprüche, sondern auch aus der Kombination der einzelnen Patentansprüche untereinander.

Alle in den Unterlagen, einschließlich der Zusammenfassung offenbarten Angaben und Merkmale, insbesondere die in den Zeichnungen dargestellte räumliche Ausbildung, werden als erfindungswesentlich beansprucht, soweit sie einzeln oder in Kombination gegenüber dem Stand der Technik neu sind.

Im Folgenden wird die Erfindung anhand von einer, lediglich einen Ausführungsweg darstellenden Zeichnung näher erläutert. Hierbei gehen aus der Zeichnung und ihrer Beschreibung weitere erfindungswesentliche Merkmale und Vorteile der Erfindung hervor.

Es zeigen:
- Figur 1:: Typische Anordnung der Kameras und Distanzmesseinheiten am Fahrzeug
- Figur 2:: Prinzip der virtuellen Projektionsfläche (Draufsicht)
- Figur 3:: Prinzip der virtuellen Projektionsfläche (Seitenansicht)
- Figur 4:: Begrenzung des Projektionsbereichs einer Kamera auf der Grundfläche der virtuellen Projektionsfläche (Seitenansicht)
- Figur 5:: Begrenzung des Projektionsbereichs einer Kamera auf der Seitenfläche der virtuellen Projektionsfläche (Seitenansicht)
- Figur 6:: Position des Objekts in der virtuellen Projektionsfläche (Schnitt)
- Figur 7:: Position des Objekts in der virtuellen Projektionsfläche mit einer schrägen Übergangsfläche (Schnitt)
- Figur 8:: Position des Objekts in der virtuellen Projektionsfläche mit runder Übergangsfläche (Schnitt)
- Figur 9:: beispielhafte Manipulation der virtuellen Projektionsfläche durch Kontrollpunkte
- Figur 10:: Übersicht Bildverarbeitungssystem

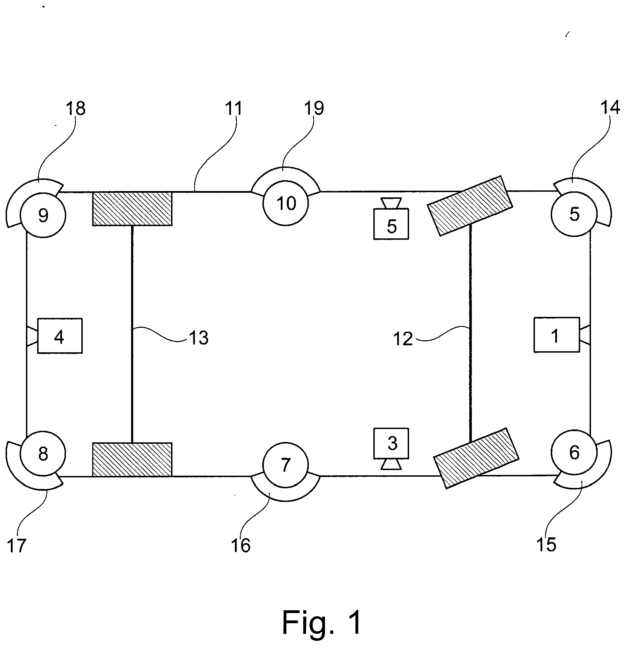

In Figur 1 ist eine mögliche Anordnung der Kameras am Fahrzeug dargestellt. In der bevorzugten Implementierung werden 4 Kameras verwendet, das beschriebene Verfahren kann aber generell mit 2 bis N Kameras implementiert werden. Werden zu wenige Kameras verwendet, steht in bestimmten Situationen keine Bildinformation zur Verfügung und der entsprechende Bildbereich wird beispielsweise mit schwarzer Farbe oder einer Warnmarkierung gefüllt.

In der bevorzugten Implementierung ist Kamera 1 beispielsweise im Kühlergrill und Kamera 4 in der Heckklappe eingebaut. Kamera 2 auf der linken Seite und Kamera 3 auf der rechten Seite sind jeweils auf der Höhe der Fahrzeugaußenspiegel montiert. Die Kombination aus Montageposition und Optik der Kameras 1-4 ermöglicht eine Umsicht um das Fahrzeug. In der bevorzugten Implementierung ist der vertikale Erfassungsbereich der Kameras 1-4 so ausgelegt, dass der gesamte Bereich von der Unterkante des Fahrzeugrahmens bis über den Horizont aufgenommen wird, so dass Objekte mit 2 m Höhe ab einer Distanz von ca. 2 m komplett abgebildet werden können. Der horizontale Erfassungsbereich jeder Kamera ist größer als 90°, daher überlappen sich die Erfassungsbereiche der Kameras 1-4 teilweise.

In der Figur 1 ist schematisiert dargestellt, dass Distanzmesseinheiten 5-10 vorhanden sind, die jeweils einen etwa kegelförmigen Meßbereich mit einem Erfassungswinkel 14-19 an den Kanten des Fahrzeuges erzeugen.

Es ist jedoch nicht lösungsnotwendig, dass die Distanzmesseinheiten 5-10 an den Kanten des Fahrzeuges angeordnet sind. Sie können zu den Kanten der Fahrzeugkontur 11 versetzt angeordnet sein.

Das Fahrzeug ist schematisiert dargestellt und hat eine etwa rechteckige Grundfläche entsprechend der Fahrzeugkontur 11, wobei schematisiert die Vorderachse 12 und Hinterachse 13 dargestellt sind.

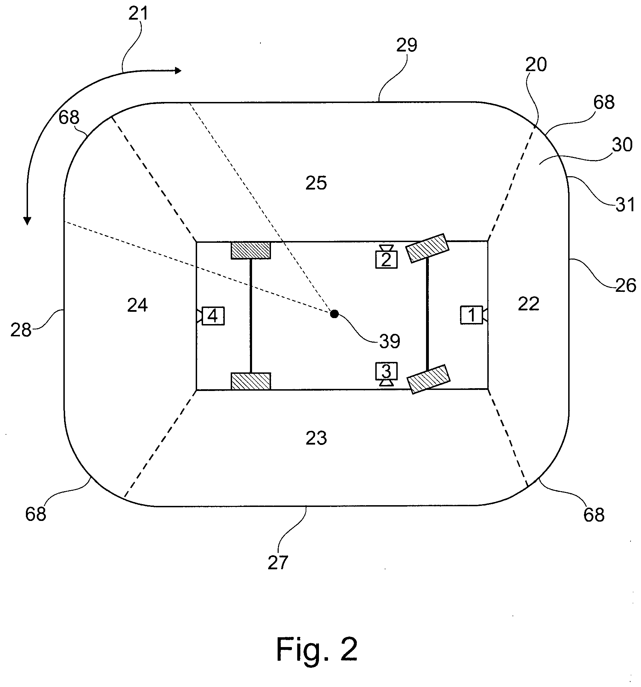

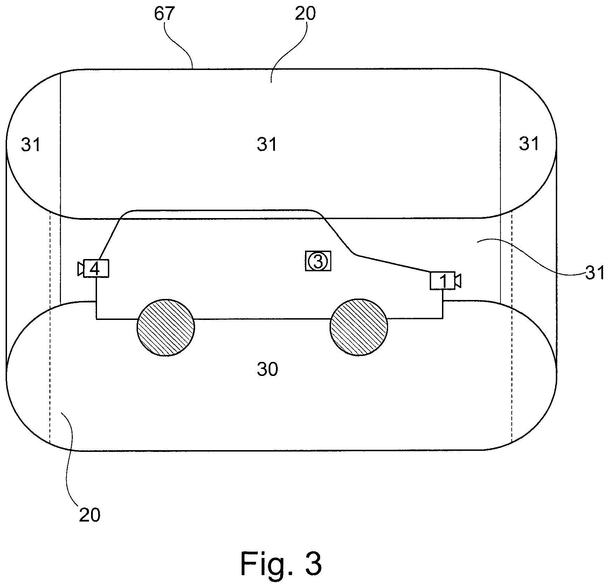

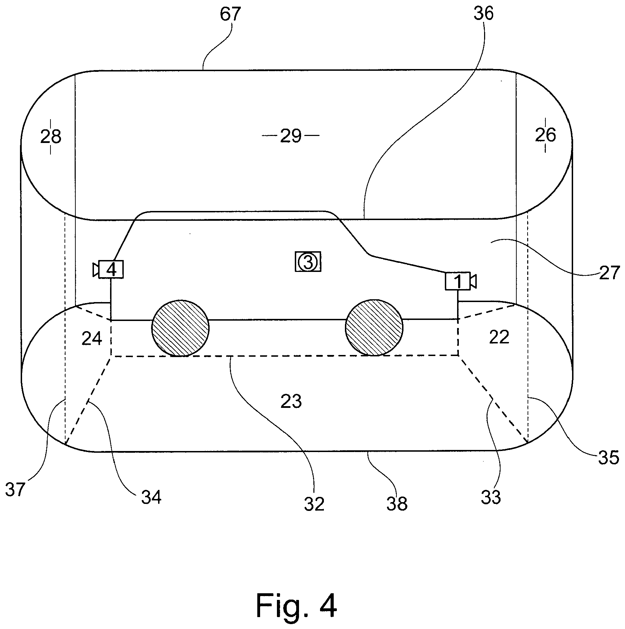

Das Prinzip der Bilderzeugung ist in Figur 2 bis 5 dargestellt. Für die Generierung der Bildansicht wird ein dreidimensionales Modell einer virtuellen Projektionsfläche 20 verwendet. In einer bevorzugten Implementierung wird für die Projektion ein geschlossener Polyeder nach Figur 3 und 4 verwendet, der aus einer Grundfläche 30, einer dazu parallelen Dachfläche und mindestens vier annähernd senkrecht darauf stehenden Seitenflächen besteht. Dieser Polyeder wird nachfolgend allgemein als virtueller Raumkörper 67 bezeichnet. Die Seitenflächen umgeben das Fahrzeug vollständig und dienen als Projektionsflächen 26-29. Ebenso wird die Grundfläche 30 als Projektionsfläche 22-25 benutzt.

Es hat sich als vorteilhaft erwiesen wenn die Übergänge 68 der Seitenflächen 31 des Polyeders durch Rundungen gebildet werden.

Die Projektionsfläche 20 ist in 4 Bereiche geteilt, deren Bildinhalte jeweils aus den Bilddaten der entsprechenden Kamera bestehen. Jeder Kamera werden dabei ein Darstellungsbereich 22 -25 auf der Grundfläche 30 sowie ein dazu korrespondierender Teil 26-29 auf der annähernd senkrechten Seitenfläche 31 zugeordnet.

Entsprechend der Aufteilung der virtuellen Projektionsfläche in vier Teilbereiche für die vier Kamerabilder ergeben sich die in Figur 2 und Figur 3 dargestellten Erfassungsbereiche der Kameras 1-4.

Mittels der bekannten optischen Parameter der Kameras 1-4 und ihrer Montagepositionen im Fahrzeug wird jeweils eine Rückprojektion des aufgenommenen Bildes auf die virtuelle Projektionsfläche 20 berechnet. Im Nahbereich können die Fahrbahn und bodennahe Objekte auf den waagerechten Boden des Polyeders projiziert und korrekt dargestellt werden. Zudem können auf der annähernd senkrechten Projektionsfläche 20 erhabene Objekte mit wenigen Verzerrungen abgebildet werden.

Auf der Anzeigeeinheit 64 (Display) wird ein Ausschnitt 21 dieser virtuellen Projektionsfläche 20 dargestellt, der in Figur 2 beispielhaft für eine Rückwärtsfahrt nach links dargestellt ist.

In Figur 4 ist die Begrenzung des Projektionsbereichs auf der Grundfläche und Seitenfläche der virtuellen Projektionsfläche beispielhaft für die Kamera 3 dargestellt.

Der Darstellungsbereich der Bilddaten für eine Kamera auf der Grundfläche wird durch vier Geraden oder Bogenlinien definiert. Für die Kamera 3 ergibt sich am Fahrzeug die Begrenzung 32 durch die Verdeckung des Fahrbahnbelags durch den Fahrzeugrahmen in Abhängigkeit von der Montageposition der Kamera. Seitlich erfolgt die Begrenzung durch die Darstellungsbereiche der benachbarten Kameras nach vorne zur Kamera 2 durch die Begrenzungslinie 33 und nach hinten zur Kamera 4 durch die Begrenzungslinie 34. Der Übergang 38 zu der vorwiegend senkrechten Seitenfläche begrenzt den Projektionsbereich der Grundfläche nach außen.

Die Begrenzung des Projektionsbereichs auf die Seitenfläche für die Kamera 3 erfolgt nach vorne zur Kamera 1 durch die Begrenzungslinie 35 und nach hinten zur Kamera 4 durch die Begrenzungslinie 37. Nach oben zur Dachfläche erfolgt die Begrenzung des Projektionsbereichs durch die Begrenzungslinie 36.

Der Übergang der Bilddarstellung zwischen zwei Kameras an den Begrenzungslinien 33, 34, 35 und 37 sowie den entsprechenden Übergängen der anderen Kameras kann dabei durch eine Überblendung fließend, oder durch einen harten Übergang mit einer optionalen Markierung erfolgen.

Auf der Anzeigeeinheit wird ein Ausschnitt als angezeigter Bereich 21 dieser virtuellen Projektionsfläche dargestellt, der in Figur 2 beispielhaft für eine Rückwärtsfahrt nach links dargestellt ist. Der angezeigte Bereich 21 umfasst in Abhängigkeit von Position und Ausrichtung der virtuellen Betrachtungsposition 39 zu verschiedenen Anteilen Bildinformation von der vorwiegend senkrechten Seitenfläche 31 und der Grundfläche 30. Aus den vorstehenden Abbildungen der Figur 3 bis Figur 4 ergibt sich, dass ein Teil der Grundfläche der virtuellen Schachtel mit 23 bezeichnet ist.

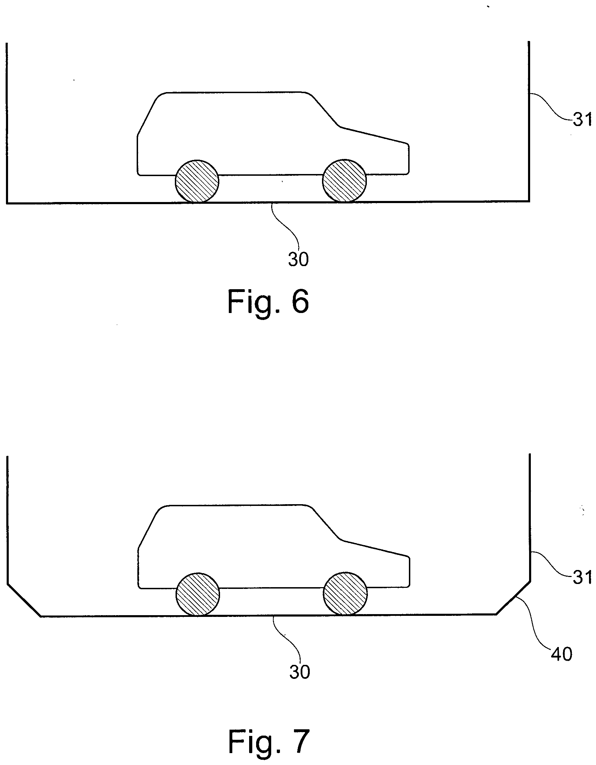

Dem entgegen bildet in Figur 6 und 7 die Grundfläche 30 den gesamten Boden der Schachtel. Weil Grundfläche 23 nur einen Projektionsbereich einer Kamera enthält, sind die gewählten Bezeichnungen konsistent. Nach einer bevorzugten Ausgestaltung der Erfindung ist es vorgesehen, dass auch die Grundfläche 30 Teil des Abbildungssystems ist.

Dies hat den besonderen Vorteil, dass sich beispielsweise auf der Fahrbahn befindliche Fahrbahnmarkierungen mit dem erfindungsgemäßen Abbildungssystem verzerrungsfrei dargestellt werden können. Dies war bisher nicht bekannt.

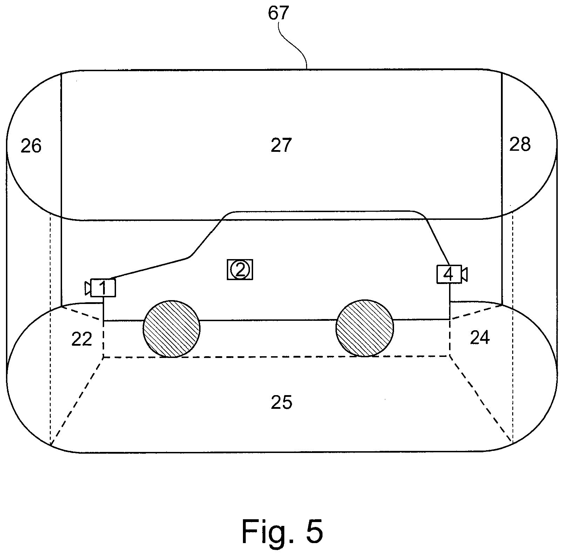

Die Figur 5 zeigt im Übrigen die Begrenzung des Projektionsbereichs einer Kamera auf der virtuellen Projektionsfläche in der Seitenansicht. Hier werden die Abbildungsbereiche der Kamera 2 dargestellt.

Grundsätzlich entspricht die Figur 5 der Figur 4 und der dort dargelegten Erläuterung, wobei Figur 4 die Abbildung der Kamera 3 zeigt, während die Figur 5 die Abbildung der Kamera 2 zeigt.

Die Ausgestaltung des Übergangs zwischen der Grundfläche 30 und der annähernd senkrechten Seitenfläche 31 kann unterschiedlich ausgeführt werden.

In einer ersten Implementierung steht die annähernd senkrechte Seitenfläche 31 direkt auf der Grundfläche 30. Dieser Fall ist in Figur 6 dargestellt. Diese Darstellungsform hat jedoch den Nachteil dass die Ansatzlinie der senkrechten Fläche stark sichtbar wird.

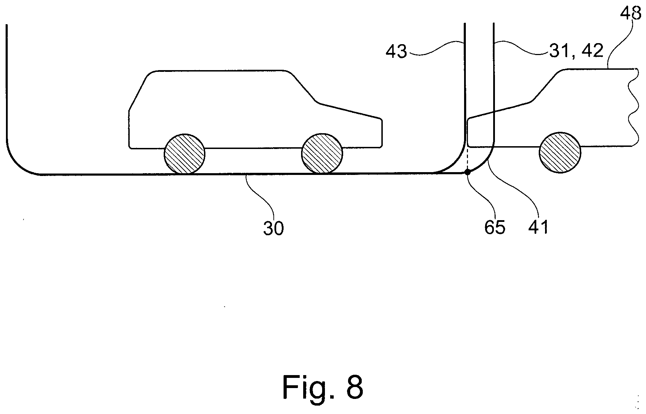

Deshalb wird in einer zweiten bevorzugten Implementierung entsprechend Figur 7 mindestens eine schräge Übergangsfläche 40 zwischen die Grundfläche 30 und die annähernd senkrechte Seitenfläche 31 eingefügt.
In einer dritten bevorzugten Implementierung entsprechend Figur 8 wird der Übergang zwischen der Grundfläche 30 und der annähernd senkrechten Seitenfläche 31 durch eine Rundung 41 gebildet. Diese hat den Vorteil dass die Ansatzlinie nicht sichtbar ist und kleine Fehler bei der Positionierung der annähernd senkrechten Seitenfläche kaschiert werden.

Die beschriebene Anordnung der Projektionsflächen kann mittels einer Bildansichtsberechnungseinheit zur Anzeige gebracht werden. In der Praxis hat sich herausgestellt dass in vielen Situationen nur ein unbefriedigendes Ergebnisbild dargestellt wird, weil sich der Übergang zur annähernd senkrechten Seitenfläche 31 nicht an der korrekten Position befindet. Für eine optimale visuelle Darstellung ist es vorteilhaft, wenn sich der Übergang zur annähernd senkrechten Seitenfläche 31 genau am Fußpunkt 65 eines erhöhten Objekts befindet. Andernfalls wird das Objekt in der Darstellung nach unten geklappt oder nach oben geknickt.

Unter dem Begriff "Fußpunkt des nächstliegenden erhöhten Objektes" wird der Schnittpunkt der Grundfläche mit einem Lot an der vordersten Begrenzungslinie des Objektes verstanden, welches nächstliegend dem Betrachter (Kamera) angeordnet ist. Ein solcher Fußpunkt ist beispielsweise der Punkt 65 in Figur 6.

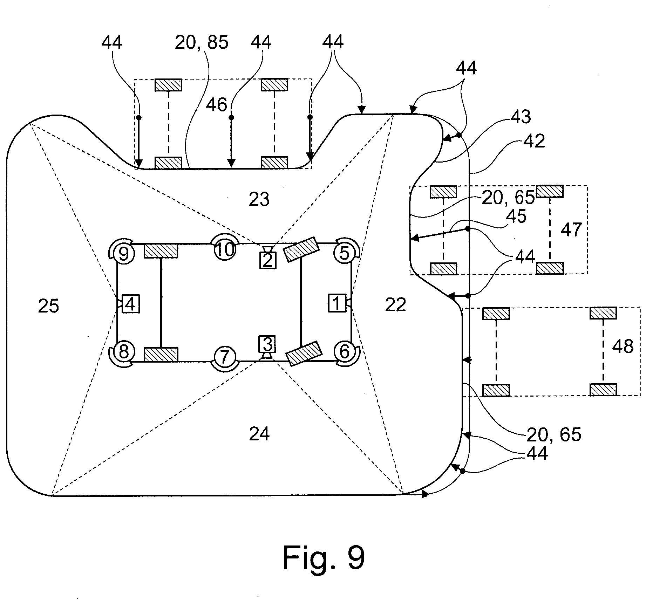

Um das beschriebene Problem der verzerrungsfreien Abbildung von Objekten im Nahbereich zu lösen, ist es notwendig, die Position der annähernd senkrechten Seitenfläche 31 an den Abstand zum nächstliegenden erhöhten Objekt in jeder abgebildeten Richtung anzupassen. Dies ist exemplarisch in Figur 9 für eine Situation mit mehreren Fahrzeugen in der Nah-Umgebung dargestellt.

Die annähernd senkrechte Seitenfläche 31, welche als virtuelle Projektionsfläche 20 dient, wird zunächst in einer definierten maximalen Distanz vom Fahrzeug platziert, entsprechend der Seitenfläche 31 in der Draufsicht (Figur 9). Falls sich jedoch erhöhte Objekte in einer näheren Distanz zum Fahrzeug befinden en, so wird die Seitenfläche 31 entsprechend den ermittelten Distanzwerten an den betreffenden Kontrollpunkten 44 nach innen verschoben, woraus sich die angepasste Seitenflächen 43 ergibt. Die Seitenfläche 31 bzw. 43 ist stets eine zusammenhängende Fläche. Die Anschlussflächen zwischen der Seitenfläche 31 und der adaptiv verschobenen Seitenflächen 43 werden als stetige Flächen ausgebildet. Die Seitenflächen 43 selbst ist bevorzugt auch als stetige Fläche ausgebildet.

Figur 9 stellt eine bevorzugte Implementierung des adaptiven Verfahrens zur Manipulation der annähernd senkrechten Seitenfläche 31 dar. Entsprechend dem vorgeschlagenen Verfahren soll die annähernd senkrechte Seitenfläche 31 durch eine Anzahl M an Kontrollpunkten 44 im Abstand zum Fahrzeug manipulierbar sein. Die Kontrollpunkte 44 Werden mit einer Rechenvorschrift aus den Distanzwerten ermittelt.

Die Kontrollpunkte 44 beschreiben die Geometrie des Polyeders (virtueller Raumkörper 67), welcher die Projektionsfläche 20 bildet. Zwischen den Kontrollpunkten 44 wird die Seitenfläche 43 durch ein mathematisches Verfahren interpoliert. Es hat sich als vorteilhaft erwiesen, für die Interpolation das Verfahren der stückweisen linearen Interpolation zu verwenden.

Ergibt die Distanzmessung der Distanzmesseinheiten 5-10, dass sich ein Objekt 46, 47, 48 innerhalb der begrenzenden Seitenfläche 31 befindet, so werden die Kontrollpunkte 44 entsprechend der gemessenen Distanzwerte nach innen verschoben. Zwischen der ursprünglichen Seitenflächen 31 und der angepassten Seitenfläche 43 ergibt sich also ein ortsabhängiger Abstandswert 45.

Das Verfahren ist beispielhaft für die Umgebungsobjekte 46-48 illustriert. Im Bereich der Distanzmesseinheiten 7 und 8 werden keine nahen Objekte ermittelt. Dementsprechend erfolgt keine Anpassung der Kontrollpunkte und die Seitenflächen 31 und 43 liegen übereinander.

Auf der linken Seite im Sichtbereich der Kamera 2 befindet sich das Fahrzeug 46 parallel zum eigenen Fahrzeug. Die Distanzmesseinheit 10, in dessen Erfassungsbereich 19 sich das Objekt aufhält, liefert entsprechende Distanzmesswerte die der Umgebung räumlich zugeordnet werden.

Kern der vorliegenden Erfindung ist demnach die verzerrungsfreie Abbildung von Objekten im Nahbereich eines Fahrzeuges - die lediglich in Figur 9 als Fahrzeuge 46, 47, 48 beispielhaft dargestellt sind -, welches mit Hilfe von Distanzmesseinrichtungen und Kameras möglichst verzerrungsfrei die Umgebung im Nah- und im Fernbereich abbildet.

Der "Nahbereich" meint, dass eine verzerrungsfreie Abbildung auch innerhalb der Seitenfläche 31 mit den Merkmalen der Erfindung erfolgen kann, während der "Fernbereich" meint, dass eine solche verzerrungsfreie Abbildung im Außenbereich, d. h. außerhalb der virtuellen Seitenfläche 31 möglich ist.

Durch die adaptive Anpassung der Seitenflächen 31 an ein sich im Nahbereich befindendes Objekt 46-48 durch adaptive Erzeugung einer daran angepassten neuen Seitenflächenkontur 43 wird erstmals erreicht, dass auch im Nahbereich sich aufhaltende Objekte 46-48 verzerrungsfrei abgebildet werden können.

Nachdem die Erfindung eine Umgebungsmodellierung durchführt, ergibt sich nun auch erstmals die Möglichkeit einer dreidimensionalen Abbildung an einer hierfür geeigneten Anzeigeeinheit 64 im Fahrzeug, die in der Lage ist dreidimensionale Bilder dem Betrachter darzubieten.

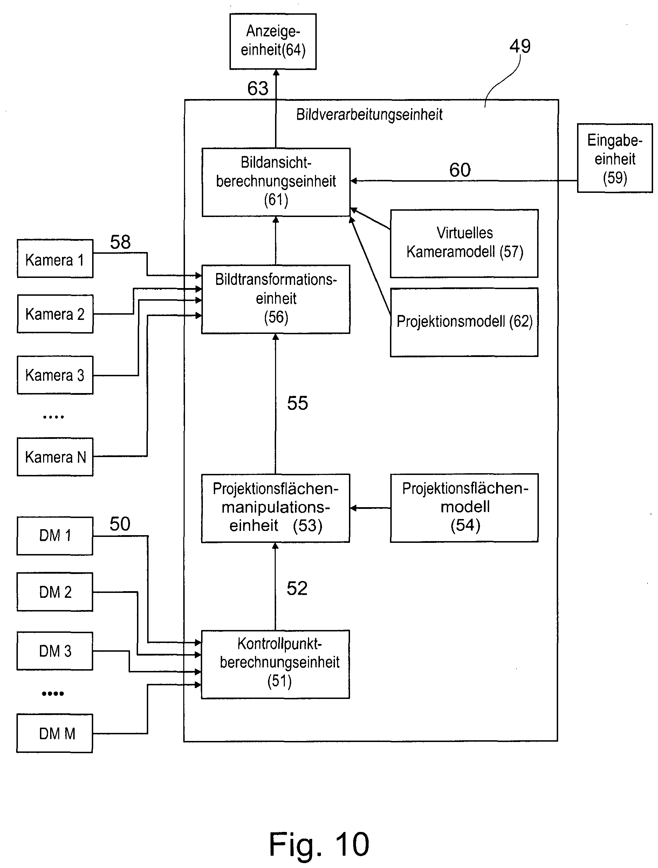

Die Erzeugung der beschriebenen Bildansicht erfolgt mit dem in Figur 10 dargestellten Bildverarbeitungssystem. Die Bildsignale 58 mindestens einer Kamera werden in die Bildverarbeitungseinheit 49 eingespeist. Die Bildverarbeitungseinheit 49 empfängt außerdem mindestens eine Distanzinformation 50 von mindestens einer Distanzmesseinheit 5-10.

Die Distanzinformation 50 kann auf unterschiedliche Weise gewonnen werden. Gebräuchliche Verfahren sind z.B. Ultraschallsensoren, welche an der Stossstange montiert sind. Die Distanzinformation 50 kann aber beispielsweise auch mittels Lasermessung oder stereoskopischer Bildverarbeitung gewonnen werden. Insbesondere kann eine Distanzmesseinheit 5-10 mehrere richtungsabhängige Distanzinformationen 50 liefern, so dass die Anzahl der Kontrollpunkte 44 deutlich höher sein kann als die Anzahl der Distanzmesseinheiten 5-10. Einige Verfahren zur Distanzmessung wurden im allgemeinen Teil dieser Beschreibung dargestellt.

Die Kontrollpunktberechnungseinheit 51 berechnet aus den empfangenen Distanzinformationen 50 die Distanz zu den nächstliegenden Objekten im Umfeld des Fahrzeugs. Bei dieser Berechnung werden sowohl die Montagepositionen der Distanzmesseinheiten 5-10 als auch die Richtung jeder Distanzmessung berücksichtigt so dass sich ein recht genaues Modell der Umgebung in Relation zur Fahrzeugkontur 11 ergibt. Der Abstand der Kontrollpunkte 52 zur Fahrzeugkontur 11 wird auf einen Maximalwert begrenzt welcher der Seitenfläche 31entspricht. Damit wird verhindert, dass die virtuelle Projektionsfläche 20 unendlich weit entfernt platziert wird, falls keine nahen Objekte 46-48 gefunden werden. Für jeden Kontrollpunkt 52 der Projektionsfläche 20 wird aus den gemessenen Distanzwerten eine Positionsinformation 52 berechnet.

Die berechneten Positionsinformationen 52 zu den Kontrollpunkten werden an die Projektionsflächenmanipulationseinheit 53 weiter gegeben. Das dreidimensionale Modell der Projektionsfläche 20 ist als mathematisches Projektionsflächenmodell 54 in der Bildverarbeitungseinheit 49 hinterlegt.

In einer bevorzugten Implementierung der Erfindung wird ein geschlossener Polyeder verwendet, der aus einer Grundfläche 30, einer dazu parallelen Dachfläche und mindestens vier annähernd senkrecht darauf stehenden Seitenflächen besteht und entsprechend Figur 2 und Figur 3 als Projektionsflächenmodell hinterlegt. Es hat sich als vorteilhaft erwiesen, wenn die Übergänge 41 der Seitenflächen des Polyeders durch Rundungen gebildet werden. Insbesondere ist die Erfindung nicht dahingehend eingeschränkt dass die Seiten des Polyeders parallel zu einander oder zur Fahrzeuggeometrie ausgerichtet sind.

In der Projektionsflächenmanipulationseinheit 53 wird das hinterlegte Projektionsflächenmodell 54 der virtuellen Projektionsfläche 20 dynamisch zur Laufzeit anhand der Positionsinformation der Kontrollpunkte 52 verändert. Das Ergebnis der Manipulation ist beispielhaft in Figur 9 dargestellt. Die Grundfläche des Polyeders um das Fahrzeug wird entsprechend der aktuellen Positionsinformation verändert. Die Lage der annähernd senkrechten Seitenfläche 31 zwischen den Kontrollpunkten 44 wird durch ein mathematisches Verfahren interpoliert. Das Ergebnis der Manipulation der Projektionsfläche 20 ist eine Angleichung der Position der annähernd senkrechten Seitenfläche 31 mit der ermittelten Position und Geometrie der umgebenden Objekte 46-48.

Die Bildtransformationseinheit 56 empfängt die Bildsignale 58 sowie die dynamische Projektionsflächeninformation 55 und führt die Berechnungen zur Projektion der Kamerabilddaten auf das dreidimensionale Projektionsflächenmodell durch. durch. Die Bildtransformationseinheit 56 erhält von jeder der N Kameras eine zeitliche Abfolge von Bildern und berechnet jeweils aus den zeitlich zusammengehörigen N Bildern die Darstellung auf der virtuellen Projektionsfläche 20 entsprechend den Figuren 2 und 3 bzw. Figur 9.

Über eine Eingabeeinheit 59 kann der Benutzer den Bildbereich der Umsicht bestimmen, der auf der Anzeigeeinheit 64 dargestellt werden soll. Für die Eingabeeinheit 59 sind verschiedene Implementierungen möglich. So können beispielsweise Schalter am Lenkrad oder Armaturenbrett, ein berührungsempfindlicher Bildschirm, der mit der Anzeigeeinheit kombiniert ist oder auch Lenkrad und Schalthebel, sowie Kombinationen aus diesen Eingabegeräten verwendet werden. Die Bildansichtsberechnungseinheit 61 generiert aus den Eingabedaten 60 der Eingabeeinheit 59 und den Ausgabedaten der Bildtransformationseinheit 56 die Bildausgabeinformation 63. Diese entspricht einer Ansicht des Bereichs 21 des Projektionsflächenmodells, der zur Anzeige gebracht werden soll.

Die Bildverarbeitungseinheit 63 verwendet zur Erzeugung der Bildansicht auf der Anzeigeeinheit 64 eine Bildansichtberechnungseinheit 61, in der das dreidimensionale Projektionsflächenmodell 54, 55 auf den zweidimensionalen Bildschirm der Anzeigeeinheit 64 abgebildet wird. Eine solche Abbildung kann beispielsweise in mathematisch kompakter Form durch eine virtuelle Kamera beschrieben werden, welche den Blick eines Betrachters der Projektionsfläche simuliert.Hierauf ist die Erfindung jedoch nicht beschränkt. Zur Bildansichtsberechnung kann jede Projektion eines Teilbereichs der virtuellen Projektionsfläche auf eine Fläche verwendet werden, welche auf dem Bildschirm dargestellt wird. Die Verwendung eines virtuellen Kameramodells 57 ist also nicht zwingend erforderlich. Alternativ kann beispielsweise ein einfaches Projektionsmodell 62 verwendet werden welches lediglich einen Bildausschnitt aus der virtuellen Projektionsflächenmodell 54 herausschneidet.

In einer bevorzugten Implementierung wird für die Bilderzeugung das Modell einer perspektivischen Projektion verwendet und als virtuelles Kameramodell 57 hinterlegt. Diese verwendet das mathematische Modell einer Lochkamera mit Zentralprojektion in der entfernte Objekte kleiner erscheinen als nahe Objekte.

In einer zweiten bevorzugten Implementierung wird für die Bilderzeugung das Modell einer orthogonalen Parallelprojektion verwendet und als virtuelles Kameramodell 57 hinterlegt. Im Gegensatz zur perspektivischen Projektion verlaufen die Projektionsstrahlen parallel zu einander. Dadurch werden gleich große Objekte unabhängig von ihrer Distanz zur virtuellen Kamera gleich groß dargestellt.

Durch die Erstellung eines virtuellen Kameramodells 57, welches als mathematisches Modell eine Lochkamera mit Zentralprojektion verwendet, entsteht der Vorteil, dass entfernte Objekte wirklichkeitsnah auch kleiner erscheinen als nahe Objekte.
Ausgehend von dem dreidimensionalen Modell, welches nach der Erfindung erzeugt wurde, kann ein virtuelles Kameramodell 57 verwendet werden , um den erzeugten dreidimensionalen Raumkörper zu betrachten.

Eine solche Abbildungsart ist bei Videospielen bekannt, bei der es möglich ist, einen bestimmten Raumkörper aus einer bestimmten Blickrichtung zu betrachten, wobei diese Blickrichtung durch den Betrachter auch in geeigneter Weise verändert werden kann.

Es handelt sich also um eine virtuelle Betrachtungsposition 39 mit einem entsprechenden virtuellen Kameramodell 57, mit der es möglich ist, den virtuellen Raumkörper, der adaptiv an im Nahbereich befindliche Objekte angepasst ist, aus verschiedenen Blickrichtungen darzustellen.

Der Benutzer kann deshalb die Ansicht des erfindungsgemäßen Projektionsmodells mit einer virtuellen Kamera auf seiner Anzeigeeinheit betrachten.

Eine solche Betrachtung kann für beliebige Perspektiven der adaptiv erzeugten Rundumsichtdarstellung erfolgen. Es ist sinnvoll, diese virtuelle Betrachtungsposition im Fahrzug zu platzieren, um aus dem Fahrzeug heraus Darstellungsmöglichkeiten für die adaptive Rundumsicht zu ermöglichen.

Hierauf ist die Erfindung jedoch nicht beschränkt.

Eine virtuelle Betrachtungsposition kann auch außerhalb des Fahrzeuges platziert werden und erzeugt dann für den Betrachter den Eindruck, als ob er sich außerhalb des Fahrzeuges befindet und sein Fahrzeug und die Umgebung von außen betrachtet. Demnach wird eine Rundumsicht, die mit den virtuellen Projektionsflächen erzeugt wurde, von außerhalb des Fahrzeuges betrachtbar.

In diesem Fall muss ein virtuelles 3-D-Modell des verwendeten Fahrzeuges eingefügt werden, denn die am Fahrzeug selbst montierten Kameras, die in den Außenbereich des Fahrzeuges blicken, können das Fahrzeug selbst nicht darstellen.

Die Betrachtungsposition wird in diesem Fall bevorzugt in der Höhe der Augen des Betrachters über der Grundlinie angeordnet, um eine wirklichkeitsnahe oder wirklichkeitsgetreue Abbildungsperspektive für den Betrachter der Anzeigeeinheit zu ermöglichen. Hierauf ist die Erfindung jedoch nicht beschränkt. Es können auch unterschiedlich hohe Betrachtungspositionen erzeugt werden.

Mit dem virtuellen Kameramodell kann die Position, die Richtung und die Brennweite einer solchen virtuellen Betrachtungsposition angegeben werden, wodurch die oben genannten Vorteile erreicht werden. Die Parameter der Bildansichtsberechnungseinheit 61 können durch die Eingabedaten 60 dynamisch verändert werden. So kann beispielsweise die Blickrichtung einer virtuellen Kamera an den Lenkwinkel und die Fahrtrichtung des Fahrzeugs angepasst werden.

In Figur 2 ist mit dem Bezugszeichen 39 eine virtuelle Betrachtungsposition einer solchen virtuellen Kamera angegeben, die den angezeigten Bereich 21 darstellt.

Die verwendete Bildansichtsberechnung sei jedoch nicht auf die beiden beschriebenen Arten der perspektivischen und orthographischen virtuellen Kamera beschränkt. So sind beispielsweise andere verzerrende Projektionen oder eine Panoramadarstellung der dreidimensionalen Projektionsfläche denkbar die mittels eines alternativen Projektionsmodells 61 erzeugt werden können

Zusammenfassend wird festgestellt, dass die Erfindung ein bildgebendes Fahrerassistenzsystem bestehend aus mindestens einer Kamera 1-4 mit Weitwinkelobjektiv, einer Distanzmesseinheit 5-10, einer Bildverarbeitungseinheit 49 und einer Anzeigeeinheit 64 beschreibt. Die Bildverarbeitungseinheit 49 generiert aus den Kamerabildern eine zusammengesetzte, virtuelle Umsicht, die einer Projektion auf einen das Fahrzeug umgebenden geschlossener Polyeder entspricht, der aus einer Grundfläche 30, einer dazu parallelen Dachfläche und mindestens vier annähernd senkrecht darauf stehenden Seitenflächen besteht.

Ein Ausschnitt dieser virtuellen Umsicht wird auf der Anzeigeeinheit 64 dargestellt.

Es werden Bilddaten sowohl für die Grundfläche 30 als auch für die annähernd senkrechte Seitenfläche berechnet. Um Fehldarstellungen am Übergang zwischen der waagerechten Grundfläche und der annähernd senkrechten Projektionsfläche zu verhindern wird die Lage der annähernd senkrechten Projektionsfläche entsprechend der Distanzinformation zu einem nächstliegenden Objekt 46-48 angepasst.

Die Anwendung der Erfindung liegt in der Unterstützung des Fahrers bei Park- und Rangiermanövern. Durch das adaptive Bilddarstellungssystem kann die Umgebung realistischer dargestellt werden als dies bei herkömmlichen Systemen der Fall ist. Somit verringert sich das Risiko von Fehlinterpretationen der dargestellten Bildinformation durch den Benutzer und es können gefährliche Verkehrssituationen vermieden werden.

**Zeichnungslegende**

| | | | |
|---|---|---|---|
| 1. | Kamera 1 | 23. | Projektionsbereich Kamera 2 Grundfläche |
| 2. | Kamera 2 | | |
| 3. | Kamera 3 | 24. | Projektionsbereich Kamera 3 Grundfläche |
| 4. | Kamera 4 | | |
| 5. | Distanzmesseinheit 1 | 25. | Projektionsbereich Kamera 4 Grundfläche |
| 6. | Distanzmesseinheit 2 | | |
| 7. | Distanzmesseinheit 3 | 26. | Projektionsbereich Kamera 1 Seitenfläche |
| 8. | Distanzmesseinheit 4 | | |
| 9. | Distanzmesseinheit 5 | 27. | Projektionsbereich Kamera 2 Seitenfläche |
| 10. | Distanzmesseinheit 6 | | |
| 11. | Fahrzeugkontur | 28. | Projektionsbereich Kamera 3 Seitenfläche |
| 12. | Vorderachse | | |
| 13. | Hinterachse | 29. | Projektionsbereich Kamera 4 Seitenfläche |
| 14. | Erfassungwinkel Distanzmesseinheit 1 | | |
| | | 30. | Grundfläche |
| 15. | Erfassungswinkel Distanzmesseinheit 2 | 31. | Seitenfläche |
| | | 32. | Begrenzung Projektionsbereich Kamera 3 Grundfläche innen |
| 16. | Erfassungswinkel Distanzmesseinheit3 | | |
| 17. | Erfassungswinkel Distanzmesseinheit 4 | 33. | Begrenzung Projektionsbereich Kamera 3 Grundfläche vorne |
| 18. | Erfassungswinkel Distanzmesseinheit 5 | | |
| | | 34. | Begrenzung |
| 19. | Erfassungswinkel Distanzmesseinheit 6 | | Projektionsbereich Kamera 3 Grundfläche hinten |
| 20. | virtuelle Projektionsfläche | 35. | Begrenzung Projektionsbereich Kamera 3 Seitenfläche oben |
| 21. | angezeigter Bereich | | |
| 22. | Projektionsbereich Kamera 1 Grundfläche | | |
| 36. | Begrenzung Projektionsbereich Kamera 3 Seitenfläche vorne | 53. | Projektionsflächenmanipulati onseinheit |
| | | 54. | Projektionsflächenmodell |
| 37. | Begrenzung Projektionsbereich Kamera 3 Seitenfläche hinten | 55. | Projektionsflächeninformation |
| | | 56. | Bildtransformationseinheit |
| 38. | Übergang Projektionsbereich Kamera 3 Grundfläche zu Seitenfläche | 57. | virtuelles Kameramodell |
| | | 58. | Bildsignal |
| | | 59. | Eingabeeinheit |
| 39. | virtuelle Betrachtungsposition | 60. | Eingabedaten |
| | | 61. | Bildansichtsberechnungseinh eit |
| 40. | schräge Übergangsfläche | | |
| 41. | Übergang mit Rundung | 62. | Projektionsmodell |
| 42. | | 63. | Bildinformation |
| 43. | angepasste Seitenflächen | 64. | Anzeigeeinheit |
| 44. | Kontrollpunkt Seitenfläche | 65. | Fußpunkt |
| 45. | Abstandswert | 66. | Überlappungsbereich |
| 46. | Umgebungsobjekt 1 | 67. | virtueller Raumkörper |
| 47. | Umgebungsobjekt 2 | 68. | Rundung im Übergangsbereich zweier Seitenflächen |
| 48. | Umgebungsobjekt 3 | | |
| 49. | Bildverarbeitungseinheit | | |
| 50. | Distanzinformation | | |
| 51. | Kontrollpunktberechnungsein heit | | |
| 52. | Kontrollpunkt Positionsinformation | | |

## Patentansprüche

1. Verfahren für ein bildgebendes Fahrerassistenzsystem zur Abbildung von im Umgebungsbereich von Land-, Wasser oder Luftfahrzeugen angeordneten Objekten (46-48) bei dem am Fahrzeug mindestens zwei Kameras (1-4) zur Erzeugung einer im Innenraum und/oder Außenraum des Fahrzeuges darstellbaren Umsicht angeordnet sind, und der Blickwinkel benachbart angeordneter Kameras (1-4) im Umgebungsbereich des Fahrzeuges sich mindestens teilweise überschneidet und dort mindestens einen Überlappungsbereich (66) ausbildet, wobei zur Erzeugung der Umsichtdarstellung ein oder mehrere Kamerabilder der Kameras (1-4) entsprechend ihrer Aufnahmeposition am Fahrzeug auf einer virtuellen Projektionsfläche (20) angeordnet werden, die als Teil eines virtuellen dreidimensionaler Raumkörpers (67) das Fahrzeug an mindestens zwei Seiten mit Abstand umgibt, und zur Erreichung einer annähernd verzerrungsfreien Umsichtfunktion von Objekten (46, 47, 48) eine dynamische Anpassung der Zusammenfügung der Kamerabilder auf der Projektionsfläche (20) durch die mathematische Verschiebung der virtuellen Projektionsfläche (20') dergestalt erfolgt, dass das Objekt (46, 47, 48) annähernd in der Ebene der virtuellen Projektionsfläche (20, 20') abgebildet wird, wobei die die virtuelle Projektionsfläche (20) an den Abstand des zu erkennenden Objektes (46, 47, 48) in Richtung auf das Fahrzeug verschoben und damit angepasst wird, **dadurch gekennzeichnet, dass** der virtuelle dreidimensionale Raumkörper (67) einen geschlossenen Polyeder bildet, der aus einer Grundfläche (39), einer dazu parallelen Dachfläche und mindestens vier annähernd senkrecht darauf stehenden Seitenflächen (31) besteht, die das Fahrzeug mindestens teilweise umgeben, dass
1. die annähernd senkrechte Seitenfläche (31), welche als virtuelle Projektionsfläche dient, in einer definierten maximalen Distanz vom Fahrzeug platziert wird,
2. und dass falls sich erhöhte Objekte (46, 47, 48) innerhalb der Seitenfläche (31) befinden, die Seitenfläche (31) entsprechend den ermittelten Distanzwerten (45, 50) zum Objekt (46, 47, 48) an Kontrollpunkten (44) nach innen als angepasste Seitenfläche (43) verschoben wird, wobei
die Kontrollpunkte (44) aus den Distanzwerten ermittelt werden, wobei
die Kontrollpunkte (44) entsprechend den gemessenen Distanzwerten nach innen verschoben werden, und wobei
die angepasste Seitenfläche (43) sich durch Interpolation zwischen den Kontrollpunkten (44) ergibt, und wobei
ein Abstandswert (45) zwischen der Seitenfläche (31) und der angepassten Seitenfläche (43) ortsabhängig ist.

## Claims

1. Method for an imaging driver assistance system for imaging objects (46-48) arranged in the surrounding region of a landcraft, watercraft or aircraft, wherein at least two cameras (1-4) are arranged at the vehicle for the purposes of producing an overview that is presentable in the interior and/or exterior of the vehicle and the viewing angles of adjacently arranged cameras (1-4) in the surrounding region of the vehicle at least partly overlap and form at least one overlap region (66) there, wherein, for the purposes of producing the overview presentation, one or more camera images of the cameras (1-4) are arranged according to their recording position at the vehicle on a virtual projection surface (20) which surrounds the vehicle on at least two sides at a distance as part of a virtual three-dimensional space body (67) and, for the purposes of achieving a virtually distortion-free overview function of objects (46, 47, 48), there is a dynamic adaptation of the stitching together of the camera images on the projection surface (20) by the mathematical displacement of the virtual projection surface (20') in such a way that the object (46, 47, 48) is imaged approximately in the plane of the virtual projection surface (20, 20'), wherein the virtual projection surface (20) is displaced to the distance of the object (46, 47, 48) to be identified in the direction towards the vehicle and hence adapted, **characterized in that** the virtual three-dimensional space body (67) forms a closed polyhedron, which consists of a base area (39), a top area parallel thereto and at least four side surfaces (31) approximately perpendicular thereto, said side surfaces at least partly surrounding the vehicle, **in that**
1. the approximately perpendicular side surface (31), which serves as a virtual projection surface, is placed at a defined maximum distance from the vehicle,
2. and **in that**, should elevated objects (46, 47, 48) be situated within the side surface (31), the side surface (31) is displaced inwardly as an adapted side surface (43) in a manner corresponding to the ascertained distance values (45, 50) to the object (46, 47, 48) at control points (44), wherein
the control points (44) are established from the distance values, wherein
the control points (44) are displaced inwardly in a manner corresponding to the measured distance values, and wherein
the adapted side surface (43) arises from interpolation between the control points (44), and wherein
a distance value (45) between the side surface (31) and the adapted side surface (43) depends on distance.

## Revendications

1. Procédé pour un système d'assistance à la conduite par imagerie destiné à former des images d'objets (46-48) disposés dans un environnement terrestre, aquatique ou aéronautique, dans lequel au moins deux caméras (1-4) sont disposées sur le véhicule pour générer une vue panoramique qui peut être affichée à l'intérieur et/ou à l'extérieur du véhicule, et les angles de vision de caméras (1-4) disposées de manière adjacente dans l'environnement du véhicule se chevauchent au moins partiellement et forment au moins une zone de chevauchement (66) dans la zone environnante du véhicule,
dans lequel une ou plusieurs images de caméra des caméras (1-4) sont agencées sur un écran de projection virtuel (20), qui entoure le véhicule à une certaine distance sur au moins deux côtés en tant que partie d'un corps spatial virtuel tridimensionnel (67), en fonction de leur position d'acquisition sur le véhicule pour générer la représentation en vue panoramique, et pour obtenir une fonction de visualisation panoramique d'objets (46, 47, 48) approximativement sans distorsion, l'assemblage des images de caméra sur la surface de projection (20) est adapté dynamiquement par le déplacement mathématique de la surface de projection virtuelle (20') de manière à ce que l'image de l'objet (46, 47, 48) soit formée approximativement dans le plan de la surface de projection virtuelle (20, 20'),
dans lequel la surface de projection virtuelle (20) est déplacée dans la direction du véhicule et est ainsi adaptée à la distance de l'objet (46, 47, 48) à détecter, **caractérisé en ce que** le corps spatial virtuel tridimensionnel (67) forme un polyèdre fermé qui est constitué d'une surface de base (39), d'une surface de toit parallèle à celle-ci et d'au moins quatre surfaces latérales (31) s'élevant de manière approximativement perpendiculaire à celle-ci, qui entourent au moins partiellement le véhicule, **en ce que**
1. la surface latérale approximativement verticale (31), qui sert de surface de projection virtuelle, est placée à une distance maximale définie du véhicule,
2. et **en ce que**, si des objets surélevés (46, 47, 48) se trouvent à l'intérieur de la surface latérale (31),
la surface latérale (31) est déplacée vers l'intérieur en des points de commande (44) en tant que surface latérale adaptée (43) en fonction des valeurs de distance déterminées (45, 50) par rapport à l'objet (46, 47, 48), dans lequel les points de commande (44) sont déterminés à partir des valeurs de distance,
dans lequel les points de commande (44) sont décalés vers l'intérieur en fonction des valeurs de distance mesurées, et dans lequel la surface latérale adaptée (43) résulte d'une interpolation entre les points de commande (44), et dans lequel une valeur de distance (45) entre la surface latérale (31) et la surface latérale adaptée (43) dépend de la position.
